# EUROPEAN PATENT APPLICATION

(11) **EP 4 818 054 A1**
(43) Date of publication of application: **07.10.2026**
(21) Application number: 25168404.9
(22) Date of filing: 03.04.2025
(51) Int. Cl.: B65B 35/40, B65B 57/04, B65B 61/26, B65B 61/28, B65G 25/08, B65G 43/08, B65G 47/08, B65G 47/82, B65B 65/00

(54) **METHOD AND CODING LINE FOR SERIALIZING A PLURALITY OF PRODUCTS**

(71) Applicant: Hicof AG, 8832 Wollerau (CH)
(72) Inventor: Toedtli, Sascha, 8832 Wollerau (CH); Frei, Cyrill, 8832 Wollerau (CH); Toedtli, Sergej, 8832 Wollerau (CH)
(74) Representative: Altmann Stößel Dick Patentanwälte PartG mbB

(57) **Abstract**

A method and a coding line (128) for serializing a plurality of products in a coding line (128) are proposed, wherein each product is packed in a cuboid box (114), wherein the coding line (128) comprises at least one pair of adjustable rails (130), an infeed conveyor (132) for transporting the boxes (114) into the coding line (128), a box stopping and blocking unit (134) and at least a first servo pusher module (136a) and a second servo pusher module (136b) being adapted for alternately moving a sub-stack (138) of the boxes (114) on the adjustable rails (130) through the coding line (128), wherein the first and second servo pusher modules (136a, 136b) are synchronized such that when one of the first and second pushers (136a, 136b) extends in an orthogonal direction of the guiding rails (130) to engage with the sub stack (138) of boxes and moves forward parallel to the adjustable rails (130) so as to push the sub stack (138) of boxes (114) forward through the coding line (128), the other one of the first and second pushers (136a, 136b) retracts in the orthogonal direction to disengage with the stack of boxes and moves backwards parallel to the adjustable rails (130), wherein the box stopping and blocking unit (134) is positioned in a distance of at least one box width in front of a crossover point (148) of the infeed conveyor (132) to the adjustable rails (130) and is configured to prevent a further movement of boxes (114) so as to provide an open space (150) in front of the sub-stack (138) of the boxes (114) at an initial section (152) of the adjustable rails (130), wherein the coding line (128) further comprises at least one printing system (118) designed for printing a serial code onto each of the boxes (114), wherein the serial code comprises at least one unique serial number, and at least one camera (120) designed for reading the serial code printed on each of the boxes (114), the method comprising the steps:
a) moving the first servo pusher module (136a) towards a rear position (156) with respect to a forward direction (116) of the boxes (114) and simultaneously moving the second servo pusher module (136b) towards a front position (162) with respect to the forward direction (116) of the boxes (114);
b) operating the box stopping and blocking unit (134) to prevent a further movement of boxes (114) into the coding line so as to provide an open space (150) in front of a sub stack (138) of the boxes (114) at an initial section (152) of the adjustable rails (130);
c) extending the first servo pusher module (136a) at the rear position (156) in an orthogonal direction to engage the servo pusher module (136a) with the sub-stack (138) of boxes (114) by using the empty space (150) in front of the sub stack (138) of boxes (114) and simultaneously retracting the second servo pusher module (136b) in the orthogonal direction at the front position (158);
d) opening the box stopping and blocking unit (134) thereby allowing the feeding conveyor (132) to fill the open space (150);
e) moving the first servo pusher module (136a) towards the front position thereby pushing the sub stack (138) of boxes (114) forward through the coding line (128) and simultaneously moving the second servo pusher module (136b) towards the rear position, whereby the sub stack (138) of boxes (114) is moved on the adjustable rails (130) to pass the printing system (118), whereby the serial code is printed onto the at least one box (114), wherein the serial code comprises the at least one unique serial number, whereby the serial code printed on the at least one box (114) is read by the camera (120) which is assessing the print quality and finally passing a reject zone where boxes (114) with substandard print quality are rejected until a final section (170) of the adjustable rails (130) is reached;
f) when the first servo pusher reaches its final position, it will retract in orthogonal direction to disengage the servo pusher module with the sub-stack of boxes;
g) repeating steps c) to f) with the second servo pusher module (136b) carrying out the actions of the first servo pusher module (136a) and vice versa, wherein steps a) to g) define a complete pushing cycle of the coding line (128).

## Description

### Field of the Invention

A prerequisite for tracking and tracing products is assigning to each one a machine-readable code which contains an individual, unique serial number. This technology is called serialization. The invention relates to method and a coding line for serializing a plurality of products, wherein each product may, specifically, packed in a cuboid box, wherein a serial code is printed onto the box and wherein the serial code is readable by a camera. Herein, by checking the serial code against a database, an origin of the product can, thus, be traced back the serial code in a distribution chain at any given point. Products in the pharmaceutical, tobacco or food industry which are, usually, produced in high volumes and packed in cuboid boxes, wherein a packaging of the products is performed on automatic packaging lines which include case packers. However, other fields of use of the present invention may also be conceivable.

### Prior Art

Driven by legal requirements in various countries including but not limited to the United States, European Union, China, Korea, Saudi Arabia, or Turkey, serialization technology is, in general, more and more implemented in the pharmaceutical industry. Similar requirements have become mandatory for tobacco, food and various other products. A description of the serialization technology for use with medical products can be found in Directive 2011/62/EU of the European Parliament and of the Council of June 8, 2011. Basically, it is legally required that each individual package or box, which can, usually, be considered as a smallest selling unit of a product, shall bear a serial code, in particular, comprising a unique serial number, which is printed onto a single box and, concurrently, stored in a database. As a result, the serial code, thus, allows tracking a flow of the product in a distribution chain at any given point. By checking the serial code printed on the box against a corresponding serial code stored in the database, the origin of the product can be traced back.

Most products in the pharmaceutical, tobacco or food industry which are produced in high volumes are, generally, packed in boxes, in particular in cuboid or near-cuboid folding boxes. Thus, the mentioned products are packaged into the boxes on automatic cartooning lines which comprise case packers specifically designed for this purpose. Further, specific coding machines are used in this workflow in order to allow printing the serial code onto the boxes. Herein, a conveyor transports the boxes comprising the products along a direction of material flow through the coding machine. A printing system being designated for printing variable data prints, from a side or from above with respect to the box, onto the box the serial code which is, typically, a barcode comprising both a global product identifier and a unique serial number. Afterwards, a camera reads the serial code printed in this manner onto the box and assesses its quality, in particular according to a standard, specifically pursuant to ISO/IEC 15415 or ISO/IEC 15416. If the serial code is assessed to be sub-standard, the box is rejected in a particular station dedicated for this purpose, whereinafter the non-rejected boxes leave the coding machine and are packed either manually or by a specific automatic case packer into a case, specifically, into a shipping case.

Although this known process appears to be considerably easy and straightforward in theory, an actual apparatus which may be designed for performing this process is, usually, highly complex, sophisticated and expensive, specifically, due to high expenses required for initial investment and operation. Herein, a high precision for a conveyor movement having a magnitude of ± 1/100 mm is required in order to be able to print the desired serial codes on each box comprising the product, wherein, in order to achieve the required precision, the conveyor movement must exhibit a highly homogenous velocity, wherein any vibrations must be avoided as far as possible. Further, a surface of the box onto which the serial code is printed must be perfectly perpendicular to the printing head of the in-line printer, thus, requiring sophisticated feeding and box transportation mechanisms. Further, since the boxes must not touch each other to allow determining their position on the conveyor with one or more sensors, a high conveyor speed is required, thus, reducing the quality of the serial code printed on the box, wherein, however, a low quality of the printed serial code may rather likely result in a high rejection rate, thus, reducing an overall efficiency of the whole process.

Modern supply chains have global dimensions and are very complex and difficult to manage. To increase transparency and allow for tracking and tracing of each individual item during its travel through the distribution channels, a unique code is printed on each item or its packaging. This method / technology is called serialization. To ensure uniqueness of these serial codes, each serial code comprises at least one unique serial number.

WO 2018/141772 A1 describes a coding line and a method for serializing a plurality of products, wherein each product is packed in a cuboid box. The coding line comprises at least one slide and at least one servo pushers being adapted for moving the boxes on the slide in a row through the coding line, wherein the coding line further comprises at least one printing system designed for printing a serial code onto the box and at least one camera designed for reading the serial code printed on the box. Despite the advantages achieved by this coding line, there is still potential for improvements. Particularly, the throughput of this coding line is sometimes not sufficiently high for modern high speed packaging lines.

### Object of the Invention

Accordingly, the object of the present invention is to provide a method and a coding line for in-line printing in an industrial environment of serialized barcodes on high volumes of a plurality products which at least partially overcome the shortcomings and/or problems of known methods and coding lines. In particular, the method and the coding line shall be designed for serializing a plurality of products with high throughput and high speed, wherein each product is comprised in a cuboid box, in a manner that exactly one particular serial code which, specifically, comprises a unique serial number, is actually printed onto a single box, wherein, by concurrently storing the particular serial code of such a coded box in a database, preferably together with a further unique identifier applied to a particular shipping case which comprises the coded box, a tracking of a flow of the product in a distribution chain at any given point may be possible.

### Disclosure of the Invention

This object is achieved by the invention using the features in the independent patent claims. Advantageous developments of the invention, which can be implemented individually or in any combination, are presented in the dependent claims.

In a first aspect of the present invention, a method for serializing a plurality of products is proposed. Herein, the method according to the present invention comprises at least the following steps a) to g), wherein, however, additional steps may further be performed. In one embodiment, steps a) to g) may be performed in a sequential approach, commencing with step a), continuing with step b), and finishing with step g), wherein, however, a subsequent step may at least partially be performed concurrently with a previous step. In an alternative embodiment, the mentioned steps may be performed in an integrative approach or in a mixed approach combining the sequential approach and the integrative approach, in particular, for minimizing time required for performing the present method. With other words, at least some of the above steps a) to g) may be performed concurrently with another step and still other steps may be performed in a sequential order.

In a preferred embodiment of the present invention, the first and second servo pusher modules may each comprise an actuator and a retractable orthogonal pusher rod, wherein this pusher rod extends and retracts, respectively, in a direction perpendicular with respect to the forward direction of the boxes by means of the actuator. In the further text driving/ shifting activities are denoted as follows:
- For the servo pusher modules movements are denoted with "moving"
- For the retractable orthogonal pusher rod movements are denoted "extending" or "retracting".

The method is configured for serializing a plurality of products in a coding line, wherein each product is packed in a cuboid box, wherein the coding line comprises at least one pair of adjustable rails, a feeding conveyor for transporting the boxes into the coding line, a box stopping and blocking unit and at least a first servo pusher module and a second servo pusher module , wherein the first and second servo pusher modules are adapted for alternately moving a sub-stack of the boxes on the adjustable rails through the coding line, wherein the first and second servo pusher modules are synchronized such that when one of the first and second pusher modules extends and moves forward parallel to the adjustable rails so as to push the sub stack of boxes forward through the coding line, the other one of the first and second pusher modules retracts and moves backwards parallel to the adjustable rails, wherein the box stopping and blocking unit is positioned at least one box width ahead of the crossover point from infeed conveyor to the rails and is configured to prevent a further movement of boxes so as to provide an open empty space in front of the sub-stack of the boxes at an initial section of the adjustable rails, wherein the coding line further comprises at least one printing system designed for printing a serial code onto each of the boxes, wherein the serial code comprises at least one unique serial number, and at least one camera designed for reading the serial code printed on each of the boxes, the method comprising the steps:
a) moving the first servo pusher module towards a rear position with respect to a forward direction of the boxes and simultaneously moving the second servo pusher module towards a front position with respect to the forward direction of the boxes,
b) closing the box stopping and blocking unit to prevent a further movement of boxes into the coding line so as to provide an open empty space in front of a sub stack of the boxes at an initial section of the adjustable rails;
c) extending the first servo pusher module at the rear position in an orthogonal direction to engage the servo pusher module with the sub-stack of boxes by using the open empty space in front of the sub-stack and simultaneously retracting the second servo pusher module (136b) in an orthogonal direction at the front position;
d) opening the box stopping and blocking unit allowing the feeding conveyor to fill the open space;
e) moving the first servo pusher module towards the front position thereby pushing the sub stack of boxes forward through the coding line with boxes coming from the infeed conveyor behind the moving first servo pusher module and simultaneously moving the second servo pusher towards the rear position, whereby the sub stack of boxes is moved on the adjustable rails to pass the printing system, whereby the serial code is printed onto the at least one box passing the printing system, wherein the serial code comprises the at least one unique serial number, whereby the serial code printed on the at least one box is read by the camera which is assessing the print quality and finally passing a reject zone where boxes with sub-standard print quality are rejected until a final section of the adjustable rails is reached;
f) when the first servo pusher reaches its final position on the bearing guideway, it will retract in orthogonal direction to disengage the servo pusher module with the sub-stack of boxes;
g) repeating steps c) to f) with the second servo pusher carrying out the actions of the first servo pusher and vice versa, wherein steps a) to g) define a complete pushing cycle of the coding line.

These two servos pusher modules may be positioned parallel to the adjustable rails at the side of them or underneath or above the stack of boxes. These servo pusher modules are synchronized for alternately moving a sub-stack of the boxes on the adjustable rails through the coding line, such that the first servo pusher module is positioned in fully retracted state at the beginning of the sub-stack facing the empty space and the second servo pusher module in fully extended state. The first servo pusher module may extend an orthogonal pusher rod into the open space where simultaneously the orthogonal pusher rod of the second servo pusher retracts. Now, the first servo module starts moving forwards, thus shifting the full stack of boxes in forward direction through the machine which comprises at least one printing system designed for printing a serial code onto each of the boxes, wherein the serial code comprises at least one unique serial number, and at least one camera designed for reading the serial code printed on each of the boxes. Synchronously, the second pusher module returns back to its rear position, ready for taking over the next pushing cycle. In this respect, it has to be noted that, as generally used, the term "orthogonal direction" refers to a direction perpendicular or orthogonal to a forward or transporting direction of the boxes through the coding line. On the other side, the moving direction of the pusher modules is performed parallel to the adjustable rails and the forward or transporting direction of the boxes through the coding line, respectively.

As used herein the term "coding line" refers to a device which allows transporting the at least one cuboid box comprising the at least one product along at least one pair of adjustable rails, in particular from an initial section of the adjustable rails, wherein at least one additional box is inserted on the adjustable rails, to a final section of the adjustable rails, wherein, after applying the serial code to the at least one box, by which procedural step each of the inserted additional boxes is converted into a "coded box", the at least one coded box is removed from the adjustable rails. Herein, the inserting of the at least one additional box to the adjustable rails and/or the removing of the at least one coded box from the adjustable rails may be formed either manually or automatically, in particular, as described below in more detail.

For the purposes of the present invention, the coding line comprises at least two actuators, which are denoted here by the term "servo pusher", each of which is adapted for triggering a joint movement of at least two boxes on the adjustable rails in form of a sub-stack of boxes through the coding line by exerting a definite force over a predefined time interval to a single box, wherein, by the triggered movement of the single box, at least one adjacent box may also be moved. The following explanations referring to a servo pusher module apply to both servo pusher modules even though referring only to a single servo pusher. As generally used, the term "sub-stack" refers to a consecutive arrangement of the at least two boxes , placed between the the first servo pusher module, positioned in its fully retracted state at the beginning of the sub-stack facing the empty space and the second servo pusher module in its fully extended state along the adjustable rails in a direction of material flow through the coding line, wherein their direction of movement along a course of the adjustable rails may also be denoted by the terms "forward" or "forward direction". As a result of this arrangement, each box may, thus, be processed along the adjustable rails in an individual manner which may, in particular, be applicable to printing the desired unique serial code onto each of the boxes.

**In** general, the servo pusher modules may be or comprise a servo-driven linear activator being capable providing high positional accuracy, uniform movement and/or fully programmable acceleration characteristics, thus, resulting in a high precision of the movement of the boxes along the adjustable rails. With the first and second servo pusher modules being synchronized such that when one of the first and second pushers extends and moves forward so as to push the sub stack of boxes forward through the coding line, the other one of the first and second pushers retracts and moves backwards, a virtually continuous conveying of sub stack of boxes is realized, i.e. without any essential interruptions. Thus, the throughput may be significantly increased.

As generally used, the term "feeding conveyor" refers to a band-shaped body, preferably at least one endless band, by means of which it is possible to act on the boxes, specifically, on a surface of the boxes. As an alternative to an endless band, the feeding conveyor may also comprise two or more segments, however, it may be designed in full or in part as a segmented band, for example, a link chain. As a further alternative, the endless band may also consist of, or be produced from, in full or in part, a flexible material having a round, oval or polygonal cross section. However, further embodiments for the servo pusher may also be feasible.

Alternatively, for feeding the boxes into the coding line, two conveyor belts using vertical drum axes, arranged left and right of the stack above the adjustable rails would also be an option. For such a solution, the servo pusher modules would preferably be arranged on top and underneath the adjustable rails.

Most boxes hosting products have a not a square but a rectangle shape with a long and a short edge. To transport them through prior art machines using horizontal flat conveyors for transporting, the boxes must be placed for stability reasons that the long edge is oriented horizontally. However, by doing so, the performance of the coding line is reduced as the printers require low transport speeds for achieving a sufficient printing quality. The proposed coding line allows a fully controlled transport, even when the box is in an upright position with the short edge at the bottom and on top. The coding can be equipped with a tilting device, ensuring the upright box transfer through the coding line.

With the box stopping and blocking unit being positioned at least one box with distance before the end of the feeding conveyor it is possible to prevent a further movement of boxes so as to provide an open empty space in front of the sub-stack of the boxes at an initial section of the adjustable rails. Thus, the box stopping and blocking unit allows to separate a sub stack of boxes from the fed boxes by creating a gap between two subsequent boxes. Particularly, the movement of a box may be temporarily blocked by engaging the box stopping and blocking unit. In a particularly preferred embodiment of the present invention, the retractable orthogonal pusher rods of the first and second servo pusher modules may extend and retract, respectively, in a direction perpendicular with respect to the forward direction of the boxes. Thus, the first and second servo pusher modules may easily enter the open area in front of the sub stack of boxes. In this respect, it has to be noted that the extension and retraction movement may be carried out in a lateral direction with respect to the forward direction or in an upwards and downwards direction.

In a further preferred embodiment of the present invention, the first and second servo pusher modules may extend and retract, respectively, parallel to a plane defined by the adjustable rails. This construction may be realized in a manner where both servo pusher modules each comprise a linear actuator, driving a slider which travels on a linear bearing guideway mounted in parallel to the stack moving direction. Each slider may be built as cross table, meaning that they host a second linear drive that can be extend or retract pusher rods in an orthogonal direction.

In a further preferred embodiment of the present invention, the first and second servo pusher modules may each comprise an actuator and a retractable orthogonal pusher rod, wherein this pusher rod extends and retracts, respectively, in a direction perpendicular with respect to the forward direction of the boxes by means of the actuator. For driving the retractable orthogonal pusher rods, a pneumatic cylinder may be used as an actuator. Such actuators are cost efficient, robust and can be precisely operated.

The first and second pusher modules may each comprise a servo actuator, wherein the first and second servo pusher modules are moved parallel to the forward direction by means of the servo actuators. Such linear servo actuators allow a precise and fast movement of the servo pusher modules.

In a further preferred embodiment of the present invention, the first and second servo pusher modules may each comprise a slider, wherein the sliders are moved parallel to the forward direction of the boxes by means of the servo actuator. For example, the sliders are moved along bearing guideways arranged parallel to the forward direction of the boxes. The linear bearing of the servo pusher modules may be formed as a slider on a guideway.

**In** a further preferred embodiment of the present invention, the sliders may be formed as cross tables, wherein each cross table supports at least one orthogonal pusher rod with a separate, dedicated actuator. Such cross tables are compact and allow movements of the supported constructional members in two different directions such as directions being perpendicular to one another.

**In** an alternative preferred embodiment of the present invention, the first and second servo pusher modules may each comprise at least one vacuum suction cup and an actuator, wherein the at least one vacuum suction cup is connected to the actuator and extend and retract, respectively, perpendicular to a plane defined by the adjustable rails. Such vacuum cups allow to push the boxes by applying a negative pressure to a surface of a box when engaging the same and moving the vacuum cups in a target direction.

**In** a further preferred embodiment of the present invention, the first servo pusher module may be arranged below the adjustable rails and the second servo pusher module may be arranged above the adjustable rails. Thus, this construction reduces the space next to or lateral to the adjustable rails.

The infeed conveyor may insert the boxes into the coding line and the boxes are transferred to the pair of adjustable rails at the crossover point which is positioned downstream behind the box stopping and blocking unit in a distance which corresponds to at least the width of a box. **In** a particularly preferred embodiment of the present invention, a pushing force that may be exerted by a servo pusher module in order to move the sub stack of the boxes along the adjustable rails may be monitored, in particular, for detecting at least one missing box in front of the respective servo pusher. As generally used, the term "monitoring" refers to a repetitive measurement of the pushing force, in particular, during the operation of the coding line. Herein, at least one of position, speed and acceleration of the servo pusher may be measured, specifically, by using an encoder. However, other kinds of sensors which may be adapted for this purpose can, alternatively, be used. Based on a precise measurement of the power consumption of the servo-controlled pusher, the precise pushing force at any pusher position can be determined. As a result, the pushing force, the position, the speed, and, if applicable, the acceleration of each box within the sub stack of the boxes which are jointly transported on the adjustable rails, can, thus, be monitored. As a result of this monitoring, it can be ensured that all desired boxes have actually been injected into the coding line.

As already indicated, the coding line comprises - in particular contrast to the conveyor belt of a prior-art coding machine - adjustable rails for moving the boxes from their insertion to their removal. As generally used, the term "rails" refers to a static base which is designed for transporting the boxes through the coding line in the forward direction. Herein, each rail, preferably, comprises a solid base, in particular, a metallic base, such as a base of steel or aluminum, having a plain surface, wherein a consistency of the surface may, specifically, be selected in order to provide tribological properties which are advantageous for the transport of the boxes and, concurrently, protect the surface, as far as possible, from any abrasion. By way of example, the consistency of the surface can, especially, be achieved by a thermal treatment of the solid base, in particular by a hardening of the steel, an anodization of the aluminum, or a coating with a hard substance or a low friction substance. Further embodiments are, however, possible.

In a further preferred embodiment, the rails may be equipped with guide railings, which may, in general, be arranged on a single side or, preferably, on both sides along the rail. As generally used, the term "guide railings" refers to a lateral support on the rail which is specifically designed for limiting potentially a lateral movement of the boxes with respect to the direction of the material flow within the coding line. Preferably, the railings may be adjustable in width, thus, facilitating a handling of boxes having different sizes, in particular, different widths. As a result, a setting of the railings can be adjusted in a manner perpendicular to the rails in order to achieve a correct positioning of each box with respect to the lateral extension on the rails. Hereby, it may on one hand, be avoided that the setting of the guide railings may be too loose which may result in a low quality of the print of the serial code onto the box as the box may be capable of exerting a lateral movement during a printing procedure when the guide railings may not be adjusted properly, whereas, on the other hand, it may also be avoided that the setting of the guide railings may be too tight, which may result in an undesired damaging of the boxes. In a particularly preferred embodiment, the guide railing may, preferably, comprise two individual rails each having an L-shape which may be designated for positioning the boxes on the rail from below and from the side. As a result, a horizontal element of the L-shaped rail may carry the box, while a vertical element of the L-shaped rail may act as a railing, thus, ensuring a precise lateral positioning of the boxes. In a preferred embodiment, one of the L-shaped rails may be arranged in a fixed position with respect to the adjustable rails while the second, mirrored L-shaped rail can, preferably, be adjusted with regard to an individual width of each of the boxes, thus, allowing a flexible use of the adjustable rails.

In this particular embodiment, the pushing force exerted by the servo pushers may, further, be used for adapting the setting of the guide railings. For this purpose, the pushing force as monitored in a fashion as described above can, further, be compared to a reference value which can be related to represent optimal guide railing settings. A deviation between the actually determined pushing force with respect to an optimal force which may be applicable for a correct setting of the guide railings may, thus, be used for correcting the settings of the guide railings, if required.

According to step a), the first servo pusher module is moved towards a rear position with respect to a forward direction of the boxes and the second servo pusher module is simultaneously moved towards a front position with respect to the forward direction of the boxes. It has to be noted that as soon as the second servo pusher is at the front position, its orthogonal pusher rod retracts. Further, the first servo pusher module, being in its retracted position will extend its retractable, orthogonal pusher rod into the open space in front of box sub-stack.

According to step b), the box stopping and blocking unit is operated to prevent a further movement of boxes so as to provide an open empty space in front of a sub stack of the boxes at an initial section of the adjustable rails. As generally used, the term "open empty space" refers to a volume above a surface of the adjustable rails which is designated, in particular with respect to a size of the volume, for receiving the at least one portion of a servo pusher module such as a retractable orthogonal pusher rod.

Once the orthogonal retractable pusher rod of the first servo pusher module is fully extended into the empty space in front of the stack, the first servo pusher extends according to step c),

According to step d), the box stopping and blocking unit is opened thereby allowing the feeding conveyor to fill the open space with at least one further box.

According to step e), the first servo pushers move forwards towards the front position and pushes the sub stack of boxes forward through the coding line. While the first servo pusher module is moving, boxes come from the infeed conveyor behind the first servo pusher module. Thus, the sub stack of the boxes is moved on the adjustable rails from the initial section of the adjustable rails to the final section of the adjustable rails. Herein, on their course along the adjustable rails the each of the boxes comprised by the sub stack of the boxes, subsequently, passes the printing system, the camera, and optional further stations, specifically one or more of a tamper evident labeler, additional labelers, and/or a reject unit, until each of the boxes as comprised by the row of the boxes reaches the final section of the adjustable rails, where the row of the boxes is pushed from the adjustable rails, either manually or automatically in a manner as described below in more detail.

As already indicated, each of the boxes as comprised by the sub stack of the boxes, subsequently, passes the printing system, whereby the serial code is, preferably in a sideward direction, printed onto at least one side of the at least one box. Herein, the printing device may, preferably, comprise a laser, thermo-transfer, a continuous- or cartridge- or drop on demand inkjet printer. However, other kinds of printing devices may also be feasible as long as a variable printing of the desired serial code onto the box passing the printing device may be possible. In particular, in the embodiment in which the servo pusher modules can be or comprise a servo-driven pushing device which is capable of providing high positional accuracy, uniform movement and/or fully programmable acceleration characteristics, the resulting high precision of the movement of the boxes may, in particular, be advantageous for an improved operation of the printing device, specifically with respect to precision and quality of the serial code which is printed on the boxes.

Herein, the term "serial code" refers to a unique identifier which, usually, comprise a global product identifier and a unique serial number applicable to a single product as comprised by the single box. In particular, the serial code may be represented by a barcode, specifically, by a linear one-dimensional barcode which generally represents data by varying width and spacings of parallel lines, or a two-dimensional barcode being adapted to represent data in an arrangement of bars, rectangles, squares, hexagons, or any other geometric pattern distributed over a limited two-dimensional area, or a dot code comprising a specific number of dots distributed over a limited two-dimensional area. Herein, the particular barcode may be generated by using a standard specification, which may be selected from the group consisting of:
- a linear barcode, as defined according to standard ISO/IEC 15417;
- a data matrix barcode, as defined according to standard ISO/IEC 16022;
- a QR barcode, as defined according to standard ISO/IEC 18004; and/or
- a dot matrix barcode, as defined in ISO/IEC TR 29158 wherein, in case of doubt, each standard may refer to a version of the respective standard at the date of filing of this document.

However, other standard or non-standard specifications which may allow generating the serial code may also be feasible. In addition to printing the serial code onto the at least one box \by using the printing device, the serial code or the at least one unique serial number as comprised by the serial code is, additionally, stored in a database.

As further indicated, each of the boxes as comprised by the sub stack of the boxes, subsequently, passes the camera, whereby the serial code which has been printed on the at least one box by using the printing device as described above is read and, subsequently, assessed in order to obtain information related to serial code, specifically, to a precision and a quality of the serial code which has been printed before on the box under investigation. Herein, the at least one rejected box may be rejected by the reject unit after checking at least one quality property of the box, wherein the at least one quality property of the box may comprise at least one of a weight of the box, a position of the serial code on the box, a quality of the serial code on the box, at least one of a position of the label on the box, and a quality of the human-readable text of the label on the box. For this purpose, any camera which may be designed for reading a serial code and to check the print quality of the human readable text by an optical character recognition algorithm may be used. By way of example, the camera may be a digital camera, for example with a CCD and/or CMOS chip, equipped with software to read, decode and analyze at least one one-dimensional or two-dimensional barcode. However, other types of cameras can also be used. The camera may use the information related to serial code to provide it to a database or, as described below in more detail, for triggering a reject unit.

In a particular embodiment, the coding line can further comprise at least one labeler which may be arranged at any position along the adjustable rails. As generally used, the term "label" refers to a substrate being attached onto a surface of the box which may present data in alphanumeric, graphic or electronic presentation, being used for providing information related to the product as comprised by the box. The information as presented on the at least one label may include price information, codes, such bar codes, data matrix codes QR codes, Electronic Data Interchange (EDI), identification codes or other product codes, such as a universal product code, Radio-Frequency Identification (RFID) labels, country of origin labels, registration marks, trademarks, symbols for product certifications, proof of purchase marks, notes providing conformance to a regulation, such as to a weight and measures accuracy regulation, e.g. a CE marking, environmental and/or recycling symbols, such as a recycling code, a resin identification code and/or a "Green Dot", special information symbols for hazardous or dangerous goods, food contact material symbols, such as an oval-shaped EC identification mark, health marks for food safety, quality insurance signs, calibration and/or troubleshooting cues. In addition, the label may also be used for presenting the serial code in a human-readable form. As further generally used, the terms "labeler" or "labeling station" refer to a device designated for applying one or more labels onto at least one of a side, a top, or a bottom of the box.

In a particular embodiment, the coding line can further comprise at least one tamper evident labeler which may be arranged after the printing and code verification camera along the adjustable rails. As generally used, "tamper evident labels" are applied on at least one flap of the folding box in a manner that a significant part of the label may stick out. This sticking out part of the label may, preferably, be bent over the edge of the box and glued on the body of the box. After the label has been applied, the box cannot be opened any more without damaging the tamper evident label. Therefore, tamper evident labels are capable of protecting the product inside the box from illicit manipulation as every access to the product will be visible by the end user of the product. Depending on the closing orientation of the flap, the tamper evident label may be applied top-down or bottom up.

In a particularly preferred embodiment, the coding line may, further, comprise a reject unit. As generally used, the term "reject unit" refers to a device which is capable of excluding a particular box, which may be denoted by the term "rejected box" from further processing together with the other boxes within the coding line by actually removing it from the adjustable rails. In a preferred embodiment the reject unit may, thus, comprise a reject pusher which may, specifically, have a form of a cylinder or a plate, which may, preferably, be arranged perpendicular to the forward direction. The reject unit may, preferably be arranged along the course of the adjustable rails, specifically, after the camera which may provide the information related to the serial code to the reject unit or directly trigger the reject unit in order to reject the particular box, also referred to as the "rejected box".

In this particularly preferred embodiment, the coding line may, further, comprise a box buffer, also denoted herein by the term "buffer". As generally used, the terms "box buffer" or "buffer" refer to a device being designed for replacing at least one missing box or rejected box, wherein for the at least one rejected box and for the at least one missing box at least one replacement box is inserted onto the adjustable rails, wherein the number replacement boxes equals a sum of the number of the rejected boxes and of the missing boxes. Consequently, at least one replacement box may, thus, be inserted onto the adjustable rails during step e), preferably, at the final section prior to the removing of the boxes from the adjustable rails.

According to step f), subsequently to step e), the box stopping and blocking unit is activated to close so as to prevent a further movement of boxes into the coding line so as to provide an open empty space in front of a sub stack of the boxes at the initial section of the adjustable rails when the first servo pusher has reached its front position and the second servo pusher has reached its rear position. At this point of time, a half pushing cycle is over or has been carried out. Thus, the first and second servo pushers are stopped when being at their final positions, either at a rear position or a front position and the box stopping and blocking unit is operated so as to prevent a further movement of boxes into the coding thereby providing an open empty space.

According to step g), as mentioned above, steps c) to f) are repeated with the second servo pusher module carrying out the actions of the first servo pusher module and vice versa. With other words, the second servo pusher module is extended when being at the rear position and simultaneously the first servo pusher module is retracted when being at the front position. Then, the second servo pusher module is moved towards the front position thereby pushing the sub stack of boxes forward through the coding line and simultaneously the first servo pusher module is moved towards the rear position, whereby the sub stack of boxes is moved on the adjustable rails to pass the printing system, whereby the serial code is printed onto the at least one box passing the printing system, wherein the serial code comprises the at least one unique serial number, whereby the serial code printed on the at least one box is read by the camera which is assessing the print quality and finally passing a reject zone where boxes with substandard print quality are rejected until a final section of the adjustable rails is reached. Simultaneously, the box stopping and blocking unit is operated so as to open thereby allowing the infeed conveyor to fill the open empty space at the initial section of the adjustable rails with boxes. Subsequently, the box stopping and blocking unit is operated to prevent a further movement of boxes into the coding line so as to provide an open empty space in front of a sub stack of the boxes at the initial section of the adjustable rails when the second servo pusher module has reached its front position and the first servo pusher module has reached its rear position. Thereby, steps a) to g) define a complete pushing cycle of the coding line.

As indicated above, the boxes which have reached the final section of the adjustable rails prior to step g) are pushed from the adjustable rails, either manually or automatically. In a particularly preferred embodiment, the coding line further may comprise an integrated case packer for a purpose of automatically handling the boxes provided at the final section of the adjustable rails. As generally used, the term "integrated case packer" refers to a device which is designed for automatically packing the row of the boxes into a shipping case, in particular, by pushing row of the boxes from the adjustable rails into the shipping case.

Specifically, the rows of the boxes which are, consecutively, provided at the final section of the adjustable rails are automatically packed in a two-fold procedure via a stacking frame into a shipping case by performing the additional steps h) and i) as follows:
h) jointly pushing the sub stack of the boxes from the adjustable rails using an orthogonal pushing rod into a stacking frame, whereby the sub stack of the boxes is placed on a bottom of the stacking frame or on top of an already existing row of the boxes already stocked in the stacking frame; and
i) jointly pushing a stack of the boxes comprising at least one level of the sub stacks of the boxes stacked on top of each other in the stacking frame using another pusher plate (into the shipping case).

Herein, step h) may, preferably, be performed concurrently with step a) while step i) may, preferably, be performed concurrently with step d) during the pushing cycle of the coding line as described elsewhere in this document in more detail.

Thus, according to step h), the sub stack of the boxes which are, specifically during step g), provided at the final section of the adjustable rails are jointly pushed from the adjustable rails into a stacking frame by using a shifter. As generally used, the term "stacking frame" relates to a unit which is designed for, consecutively, receiving the rows of the boxes which already carry the desired code and which are lined up at the final section of the adjustable rails. As further used herein, the term "shifter" refers to a further pushing device which is designed for feeding the stacking frame with a single row of coded boxes at a particular push stroke exerted by the shifter, particularly, in a direction perpendicular to the adjustable rails. As a result, an additional layer of the new boxes is placed either underneath the lowest stack of the stacking frame or, in an event in which the bottom of the stacking frame already carries a row of the coded boxes, or on top of an existing row of the coded boxes already stocked in the stacking frame. Herein, after placing the additional row of the coded boxes into the stacking frame, the stacking frame may be lowered or lifted by a height of the coded box in order to provide further space for the additional layer to be added on top until the stacking frame may be full. Herein, a number of the coded boxes which are to be transferred into the stacking frame may be defined by a packaging scheme of a case, in particular of a shipping case as described below in more detail, which is provided for later receiving the coded boxes. Preferably, each push stroke of the shifter transfers the number of coded boxes adjusted for a full row of boxes into the stacking frame. As a result, the process of stacking the coded boxes may, thus, be simplified since the additional row of the coded boxes may be added to the stacking frame from the top or from below,

According to step h), after the stacking frame may be full with a stack of the coded boxes, wherein the stack may comprise multiple levels of rows, wherein the number of the rows may, preferably, be in accordance with the packaging scheme of the shipping case, a pusher plate may push the whole stack of the coded boxes in a direction perpendicular to the adjustable rails from the stacking frame into the shipping case, which may be in an erected position for this purpose. As used herein, the term "pusher plate" refers to a further pushing device which is designed to cover the whole stack of the coded boxes in order to allow pushing the whole stack by applying a single push stroke. As generally used, the term "shipping case" relates to a case which is designated for receiving a plurality of the coded boxes in a predefined arrangement, specifically, in forms of rows and stacks, as well as for transporting the received coded boxes over distances, in particular over long distances, such as in a container that may be carried by a ship but also by a different vehicle designed for transport, such as a truck, a railway carriage, or an airplane. As a result, an additional layer of the boxes comprising the whole stack of the coded boxes may, thus, be formed in the shipping case.

The process of inserting additional stacks of the coded boxes into the shipping case may, thus, preferably, be repeated until the shipping case may be full. Thereafter, a handling of the shipping case may, either manually or automatically, be performed according to further step j) as follows:
j) replacing the full shipping case by a further empty shipping case,
wherein the empty shipping case may, specifically, be placed at the location of the full shipping case.

In a preferred embodiment, the shipping case may, additionally, comprise at least one further unique identifier, which may, specifically, be placed on a surface of the shipping case that may be accessible from outside. Herein, the at least one further unique identifier may, specifically, be or comprise a further barcode or an RFID (radio frequency identification device). In this particular embodiment, the coding line may, thus, further comprises a reading device, wherein the reading device may be designated for reading the further unique identifier located on the shipping case and transmitting received data to a database. Herein, the reading device can, preferably be a further camera, similar to the camera as described above in more detail. In the database, the codes of all the coded boxes which have been packed into a particular shipping case and which codes have previously been read by the camera are correlated with the further unique identifier on the shipping case. As a result, a tracing of the serialized products as comprised by the coded boxes within the supply chain may thus be facilitated.

In a further aspect of the present invention, a coding line for serializing a plurality of products, wherein each product is packed in a cuboid box, is proposed. As indicated above, the coding line comprises at least one pair of adjustable rails, a feeding conveyor for transporting the boxes in the coding line, a box stopping and blocking unit and at least a first servo pusher module and a second servo pusher module being adapted for alternately moving a sub-stack of the boxes on the adjustable rails through the coding line, wherein the first and second servo pusher module are synchronized such that when one of the first and second pusher modules extends and moves forward so as to push the sub stack of boxes forward through the coding line, the other one of the first and second pusher modules retracts and moves backwards, wherein the box stopping and blocking unit is positioned adjacent the end of the feeding conveyor and is configured to prevent a further movement of boxes so as to provide an open space at an initial section of the sub-stack of the boxes, the coding line further comprises at least one printing system designed for printing a serial code onto the box and at least one camera designed for reading the serial code printed on the box.

Preferably, the coding line may comprise at least one sensor which is designed for monitoring a pushing force exerted by the servo pusher to move the row of the boxes along the adjustable rails for detecting at least one missing box in front of the servo pusher.

In a particularly preferred embodiment, the coding line may further comprise guide railings which may be arranged at least partially along at least one side of the adjustable rails. Specifically, the guide railings may comprise two individual rails each having an L-shape which may be designated for positioning the boxes on the adjustable rails below and from the side. Herein, a horizontal element of the L-shaped rail may be designed for carrying the box while a vertical element of the L-shaped rail may be designed for acting as a railing. In particular, the coding line may, further, comprise at least one unit being designed for adapting the setting of the guide railings.

In addition, the coding line may, optionally comprise further units, specifically at least one checkweigher having at least one weighing plate comprising at least one force measuring sensor designed for determining the total weight of at least one additional box filled into open space. Specifically, the checkweigher may comprise at least two checkweigher plates, wherein each of the checkweigher plates has at least two weight measuring cells, wherein each of the weight measuring cells may, preferably, be positioned perpendicular to a direction of material flow at edges of each of the checkweigher plates.

In a particularly preferred embodiment, the coding line is configured to carry out the method for serializing a plurality of products in a coding line according to any one of the embodiments described above or below. Particularly, the coding line is configured in that when the first servo pusher reaches its final position on the bearing guideway, it will retract in orthogonal direction to disengage the servo pusher module with the sub-stack of boxes. Now, the second pusher will take over and starts a new pushing cycle.

For further details with respect to the coding line, reference may be made to the description above and/or below.

### Short description of the figures

Further optional details and features of the present invention may be derived from the following description of preferred embodiments, preferably in combination with the dependent claims. Therein, the respective features may be realized in an isolated way or in arbitrary combinations. However, it is emphasized that the present invention is not limited to the preferred embodiments. Identical reference numbers in the following figures refer to identical elements or to elements having identical or similar functions or to elements corresponding to each other with regard to their functionality. Herein:
- Figure 1: illustrates an exemplary embodiment of a prior-art coding line;
- Figure 2: illustrates a perspective view of a particularly preferred exemplary embodiment of a coding line according to the present invention;
- Figure 3 to 5: illustrate a particularly preferred embodiment of the pushing cycle of the method according to the present invention in a schematic top view of the coding line; and
- Figure 6: illustrates a perspective view of another exemplary embodiment of a coding line according to the present invention using vacuum cups to shift the boxes through the coding line.

### Description of exemplary embodiments

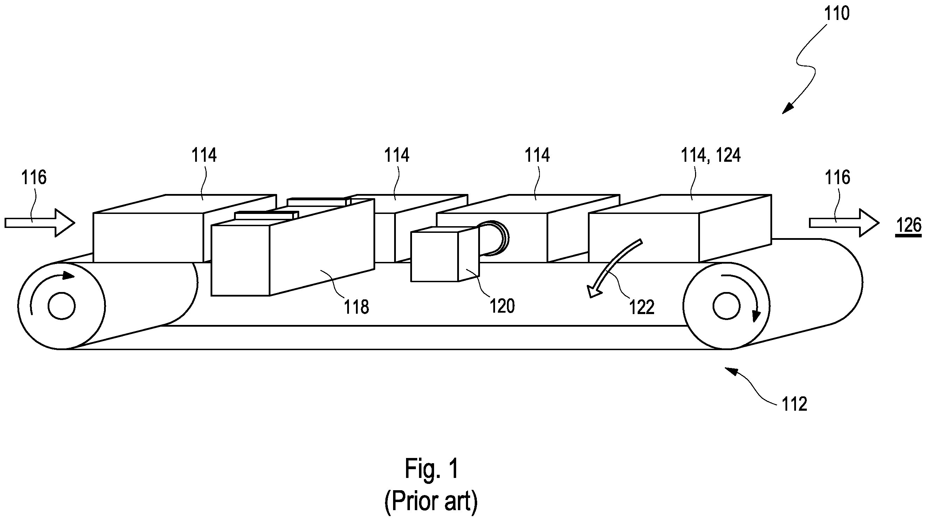

Figure 1 schematically illustrates a prior-art coding machine 110 in an exemplary embodiment in which it is, generally, used as 'best practice' solution in industry. Herein, a conveyor 112 transports a plurality of boxes 114, wherein each box 114 comprises a product (not depicted herein) from any kind of industry, for example, from the pharmaceutical, tobacco or food industry, in a consecutive manner along a direction 116 of material flow through the coding machine 110, wherein the direction 116 may also be denoted, as already indicated above, by the terms "forward" or "forward direction". Being transported by the conveyor 112 in the forward direction 116, each of the boxes 114, consecutively, passes a printing device 118 which is designated for variably printing a code (not depicted here) onto each box 114. With respect to the forward direction 116, the code is printed, preferably, from a side or from above onto each of the boxes 114. As indicated above, the code is, particularly, a unique identifier which is, usually, selected from a barcode that comprises both a global product identifier and a unique serial number, in particular, a 2-dimensional barcode, using the symbology "Data Matrix" according ISO/IEC standard 16022:2006 or "QR" barcode according to standard ISO/IEC 18004:2024

After each box 114 has passed the printing device 118, it is further transported by the conveyor 112 in the forward direction 116 where it, consecutively, passes a camera 120 which is designated for reading the code and, concurrently, assessing a quality of the code, in particular the code according to a standard, specifically pursuant to any one of the standards ISO/IEC 15415 or ISO/IEC 15416. After each box 114 has also passed the camera 120, it is further transported by the conveyor 112 in the forward direction 116 where it, consecutively, passes a reject unit 122. In an event in which the code of a box 114 may have been assessed by the camera 120 as being a sub-standard code, i.e. not being according to the selected standard, the rejected box 124 carrying the sub-standard code may be rejected in the reject unit 122, whereby it can, thus, be excluded from further processing together with the other boxes 114 by actually removing it from the conveyor 112. Finally, all other boxes 114 which have not been rejected by the reject unit 122 leave the coding machine 110, whereinafter they get to a packing station 126 where they are packed, either manually or automatically by using an integrated case packer, preferably, into a case, in particular, into a shipping case.

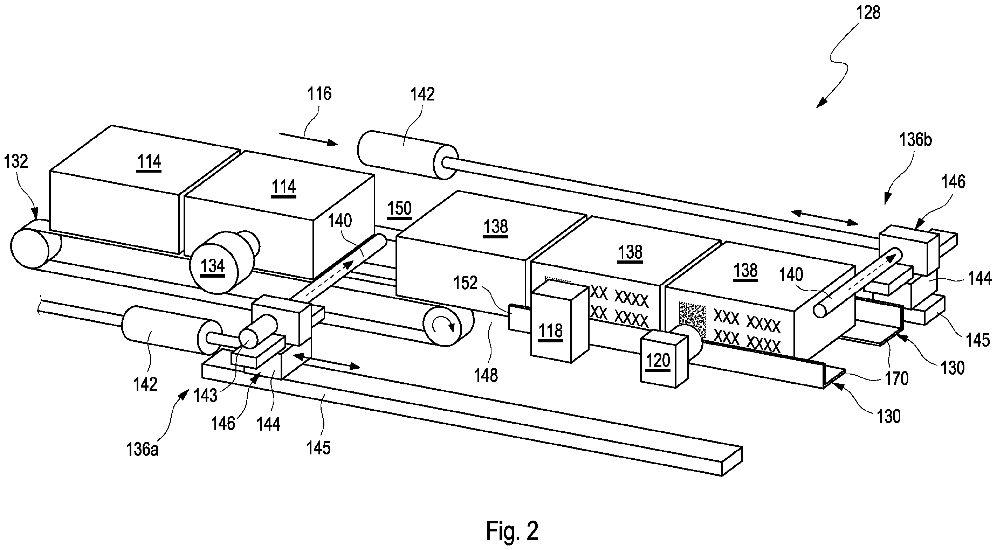

In contrast to the prior-art coding machine 110 as schematically depicted in Figure 1, Figure 2 illustrates a perspective view of a particularly preferred exemplary embodiment of a coding line 128 according to the present invention. The coding line 128 comprises at least one pair of adjustable rails 130, a feeding conveyor 132 for transporting the boxes 114 in the coding line 128, a box stopping and blocking unit 134, at least a first servo pusher module 136a and a second servo pusher module 136b. Particularly, the feeding conveyor 132 feeds the boxes 114 in a row in the coding line 128. As generally used, the term "row" refers to a consecutive arrangement of the at least two boxes along the feeding conveyor 132 in a direction of material flow through the coding line 128.

The first servo pusher module 136a and the second servo pusher module 136b are adapted for alternately moving a sub-stack 138 of the boxes 114 on the adjustable rails 130 through the coding line 128. Particularly, the first and second servo pusher modules 136a, 136b are synchronized such that when one of the first and second pusher modules 136a, 136b extends and moves forward so as to push the sub stack 138 of boxes 114 forward through the coding line 128, the other one of the first and second pusher modules 136a, 136b retracts and moves backwards. Thus, instead of exclusively using the conveyor 112 in order to transport the boxes 114 in the forward direction 116 as in the prior-art coding machine 110 of Figure 1, at least a first servo pusher module 136a and a second servo pusher module 136b are provided herein in order to move the plurality of the boxes 114, each of which comprises a particular product (not depicted herein), from all kinds of industry, for as example, from the pharmaceutical, tobacco or food industry, on the static adjustable rails 130. In particular, each box 114 is selected from a cuboid box selected from a cubic folding box or a near-cuboid folding box, the latter may comprise rounded corners at an overall cuboid shape. Preferably, the plurality of the boxes 114 exhibit the same size in order to facilitate a transport and serializing through the coding line 128. However, as described below in more detail, guide railings (not depicted here) may, additionally, be provided to the adjustable rails 130 which may facilitate the processing of boxes 114 that may vary in size between various manufacturing lots. In particular contrast to the conveyer 112, the adjustable rails 130 is designed herein as a static base adapted for transporting the boxes 114 through the coding line 128 in the forward direction 116.

As will be explained in further detail below, the first and second servo pusher modules 136a, 136b are configured to extend and retract, respectively, in a direction perpendicular with respect to the forward direction 116 of the boxes 114. More particularly, the first and second servo pusher modules 136a, 136b are configured to extend and retract, respectively, parallel to a plane defined by the adjustable rails 130. More particularly, each of the first and second servo pusher modules 136a, 136b comprises an extendable pusher rod 140 which is configured to extend and retract, respectively, in a direction perpendicular with respect to the forward direction 116 of the boxes 114. In a particularly preferred embodiment, the first and second servo pusher modules 136a, 136b can be driven by a servo-driven linear actuator 142 which is capable of providing high positional accuracy, uniform movement and/or fully programmable acceleration characteristics, thus, resulting in a high precision. The first and second servo pusher modules 136a, 136b are moveable parallel to the forward direction 116 by means of the linear actuator 142.

Further, the first and second servo pusher modules 136a, 136b each comprises a pneumatic actuator 143 such as a pneumatic cylinder or a magnetic motor. The pneumatic actuator 143 is configured to extend and retract the pusher rod 140 in orthogonal direction of the adjustable rails 130. Further, the first and second servo pusher modules 136a, 136b each comprises a slider 144, moving on bearing guideways 145 which are mounted parallel to the forward direction 116 of the boxes. As is further shown, the sliders 144 are formed as cross tables 146. Each cross table 146 supports the orthogonal retractable pusher rods 140 which, in extended position shift the stack of boxes 138 through the machine.

The box stopping and blocking unit 134 is positioned adjacent an end of the feeding conveyor 112. More particularly, the box stopping and blocking unit 134 is positioned at least one box width in front of the transition or crossover point 148 of the infeed conveyor 132 to the adjustable rails 130 if seen in the forward direction 116. The box stopping and blocking unit 134is configured to prevent a further movement of boxes 114 so as to provide an open space 150 behind a blocked box 114 if seen in the forward direction 116 and in front of the sub-stack 138 of the boxes 114 at an initial section 152 of the adjustable rails 130. Particularly, the box stopping and blocking unit 134 engages a box 114 so as to prevent a further movement of the boxes 114.

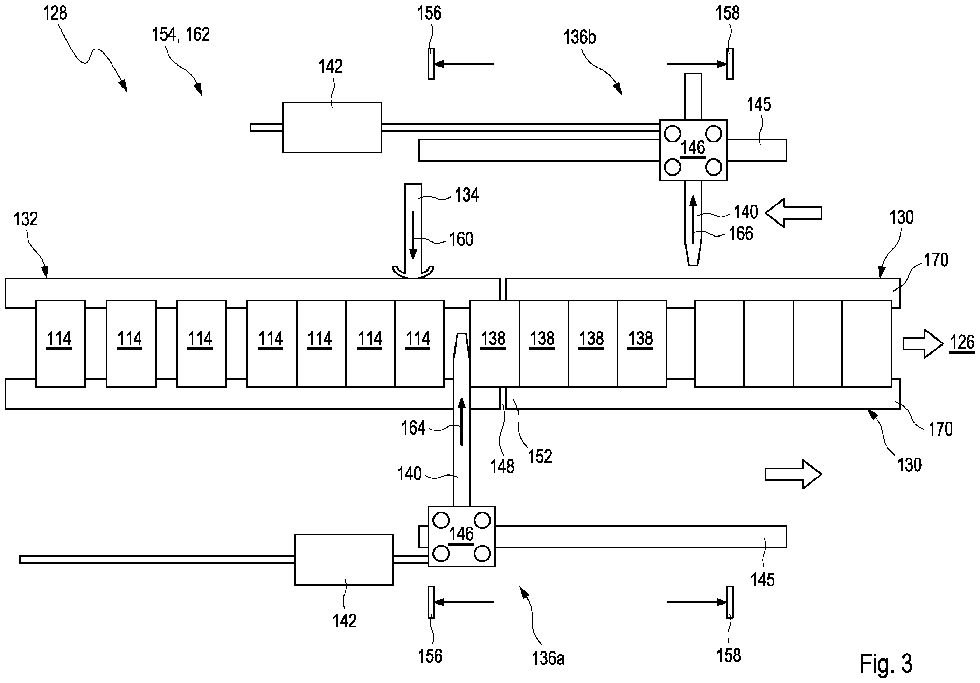

Figures 3 to 5 show a particularly preferred embodiment of the pushing cycle of the method according to the present invention in a schematic top view of the coding line 128. Herein, Figure 2 shows the starting situation a) and Figure 3 schematically illustrates an example of a first phase 154 of the pushing cycle during steps a), b) and c). Herein, the process description starts at the moment where the first servo pusher module 136a reaches and stops at its fully retracted, rear position 156 with respect to a forward direction 116 of the boxes 114. The second servo pusher module 136b is positioned at its front position 158 with respect to the forward direction 116. Further, during step b), the box stopping and blocking unit 134 is operated to prevent a further movement of boxes 114 into the coding line 128 so as to provide the open space 150 in front of a sub stack 138 of the boxes 114 at the initial section 152 of the adjustable rails 130. Further, a sub stack 138 of boxes 114 is further conveyed to the initial section 152 by means of the infeed conveyor 132. For this purpose, the box stopping and blocking unit 134 extends in an extension direction 160 perpendicular to the forward direction 116. Thus, the box stopping and blocking unit 134 stops any movement of an incoming box 114.

Figure 3 schematically illustrates also an example of a second phase 162 of the pushing cycle during step c). Herein, the first servo pusher module 136a at the rear position 156 starts extending. More particularly, the retractable right orthogonal pusher rod 140 of the first servo pusher module 136a extends. Merely as an example, the first servo pusher module 136a extends in an extension direction 164. Thereby, the retractable orthogonal pusher rod 140 of the first servo pusher 136a enters the open space 150. Further, simultaneously, the second servo pusher 136b at the front position 158 retracts in a retraction direction 166. More particularly, the retractable orthogonal pusher rod 140 of the second servo pusher module 136b at the front position 158 retracts. At this point of time, the sub stack 138 of boxes 114 stands still.

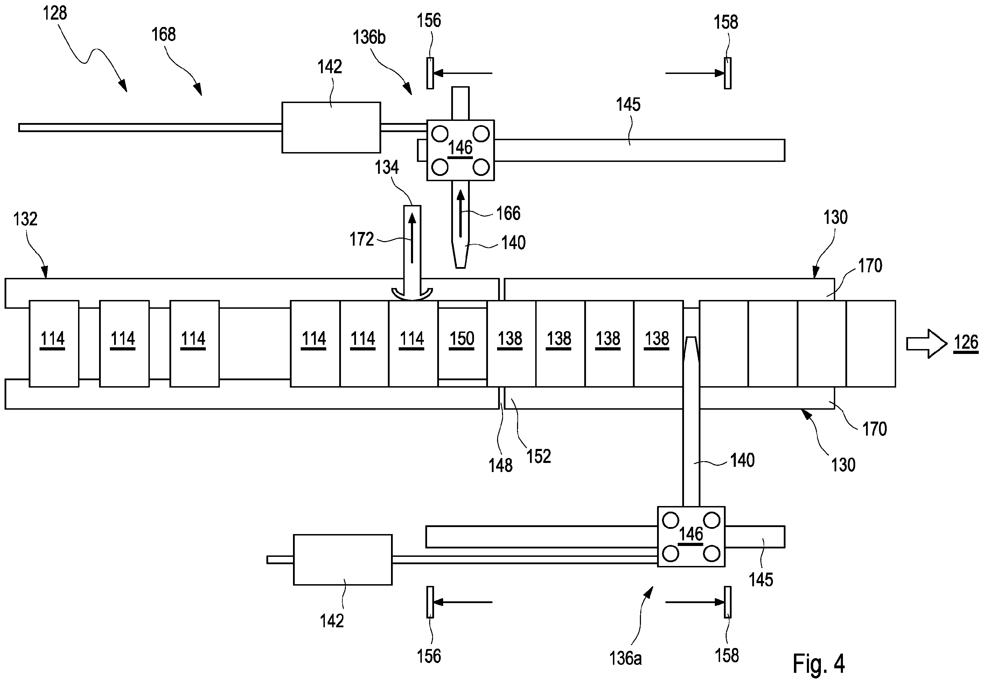

Further, Figure 4 schematically illustrates an example of a third phase 168 of the pushing cycle during step d). Herein, the first and second servo pusher modules 136a, 136b are moved synchronously in opposite directions. Particularly, the first servo pusher module 136a is moved forwards to the front position 158 and thereby pushes the sub stack 138 of boxes 114 forward through the coding line 128. Simultaneously, the second servo pusher module 136b is moved rearwards while remaining its orthogonal pusher rod is in retracted position. Thereby, the sub stack 138 of boxes 114 is moved on the adjustable rails 130 to pass the printing system 118, whereby the serial code is printed onto the at least one box 114 passing the printing system 118. The serial code comprises the at least one unique serial number, whereby the serial code printed on the at least one box 114 is read by the camera 120 which is assessing the print quality and finally passing a reject zone where boxes 114 with sub-standard print quality are rejected until a final section 170 of the adjustable rails 130 is reached.

In step e), the servo pusher module 136a starts moving forward and pushing the sub stack 138 of boxes 114 forward on the adjustable rails 130, simultaneously the box stopping and blocking unit 134 is opened so as to open in a retraction direction 172 thereby allowing the feeding conveyor 132 to fill the open space behind the moving pusher module 136a with boxes 114. It has to be noted that step e) is carried out simultaneously to step d).

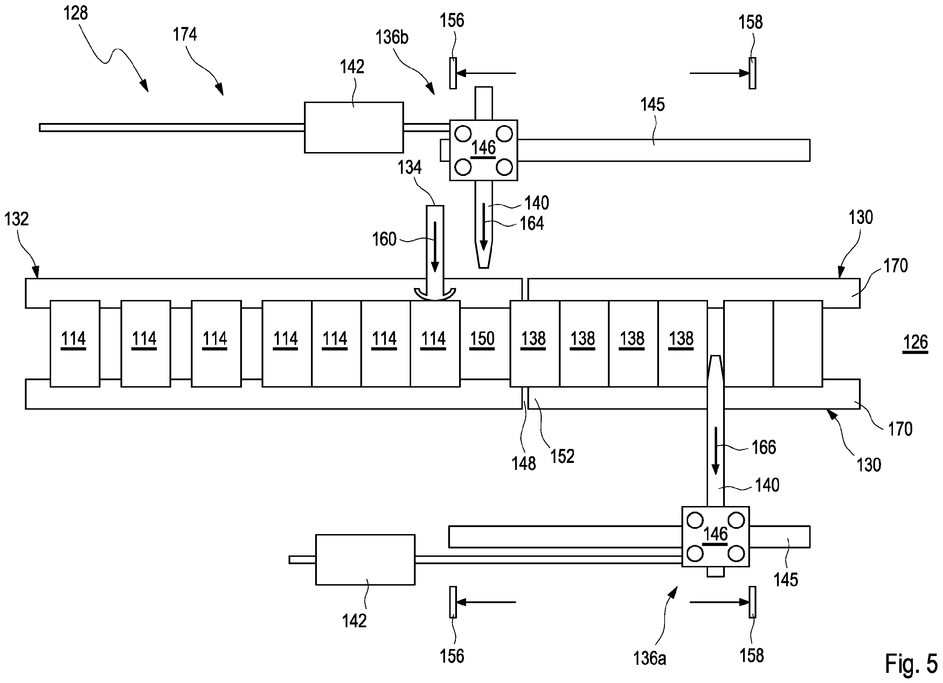

Further, Figure 5 schematically illustrates an example of a fourth phase 174 of the pushing cycle during step f). Herein, the box stopping and blocking unit 134 is operated to prevent a further movement of boxes 114 into the coding line 128 so as to provide an open space 150 in front of a sub stack 138 of the boxes 114 at an initial section 152 of the adjustable rails 130 subsequent to step e) when the first servo pusher module 136a has reached its front position and the second servo pusher module 136b has reached its rear position 156. At this point of time, a half pushing cycle is over. It has to be noted that at this point of time, the sub stack 138 of boxes 114 stands still.

Subsequently, a step g) is carried out. Herein, steps c) to f) are repeated with the second servo pusher module 136b carrying out the actions of the first servo pusher module 136a and vice versa. With other words, the second servo pusher module 136b and its retractable orthogonal pusher rod 140, respectively, is extended into the open space 150 when being at the rear position 156 and simultaneously the first servo pusher module 136a and its retractable orthogonal pusher rod 140, is retracted when being at the front position 158. Then, the second servo pusher module 136b is moved towards the front position 158 thereby pushing the sub stack 138 of boxes 114 forward through the coding line 128 and simultaneously the first servo pusher module 136a is moved towards the rear position 156, whereby the sub stack 138 of boxes 114 is moved on the adjustable rails 130 to pass the printing system 118, whereby the serial code is printed onto the at least one box 114 passing the printing system 118, wherein the serial code comprises the at least one unique serial number, whereby the serial code printed on the at least one box 114 is read by the camera 120 which is assessing the print quality and finally passing a reject zone where boxes 114 with substandard print quality are rejected until the final section 170 of the adjustable rails 130 is reached. Simultaneously, the box stopping and blocking unit 134 is operated so as to open thereby allowing the feeding conveyor 132 to fill the open empty space 150 at the initial section of the adjustable rails 130 with boxes 114. Subsequently, the box stopping and blocking unit 134 is operated to prevent a further movement of boxes 114 into the coding line 128 so as to provide an open empty space 150 in front of a sub stack 134 of the boxes 114 at the initial section of the adjustable rails 130when the second servo pusher module 136b has reached its front position and the first servo pusher module 136a has reached its rear position. Thereby, steps a) to g) define a complete pushing cycle of the coding line 128.

As explained above, by using the first and second servo pusher module modules 136a, 136b, each of the boxes 114 located on the adjustable rails 130, subsequently, passes the printing device 118 which is designated for variably printing the code (not depicted here) onto each of the boxes 114, wherein the code is printed, preferably from the side or, alternatively, from above with respect to the forward direction 116, onto each box 114. Herein, the printing device 118 may, preferably, comprise a laser or an inkjet printer. However, other kinds of printing devices 118 may also be feasible as long as they allow variably printing the desired serial code onto the passing box 114.

In a particular embodiment, the coding line 128 can be equipped with at least one labeler (not depicted here), which may be arranged at any position at the coding line 128, such as between the printing device 118 and the camera 120. Herein, the labeler may be designated for applying at least one label onto at least one of a side, a top, or a bottom of the box 114, in particular, in order to provide a human readable text in addition to the machine-readable code and/or to tamper evidence purpose onto the box 114.

Thereafter, each box 114 is further transported on the adjustable rails 130 in the forward direction 116 by means of the first and second servo pusher module modules 136a, 136b where it, subsequently, passes the camera 120 which is designated for reading the code and assessing the quality of the code. In a manner similar to the description as provided above in conjunction with Figure 1, the quality of the code may be assessed according to a standard applicable for this purpose, specifically, pursuant to any one of the standards ISO/IEC 15415 or ISO/IEC 15416. However, further kinds of assessments of the quality of the code may also be feasible.

Thereafter, each box 114 is, consecutively, transported on the adjustable rails 130 in the forward direction 116 where it, subsequently, passes the reject unit 122. Herein, in the event in which the code having been assessed by the camera 120 as a sub-standard code, the particular box 114 carrying the sub-standard code may be rejected, whereby it may be excluded it from further processing together with the other boxes 114 by actually removing it from the adjustable rails 130. In a preferred embodiment as schematically depicted in Figures 2 to 6, a reject pusher (not shown explicitly in these figures)), having a form of a cylinder or a plate, which may, preferably, be arranged perpendicular to the forward direction 116 may be used for this purpose within the reject unit 122 as shown in Figures 1.

Finally, all other boxes 114 which have not been rejected by the reject unit, which are further denoted herein as coded boxes, reach the final section 170 of the adjustable rails 130, at which position they can be removed manually or automatically shifted to a packing station 126 where they are filled, in particular, into a case, specifically, into a shipping case as described below in more detail.

As indicated above, the adjustable rails 130, as used in transporting the boxes 114, can be arranged on a single side or, preferably, on both sides of the adjustable rails 130 with respect to the forward direction 116, wherein the guide railings 130 may, preferably, be adjustable in width, whereby boxes 114 having different sizes can, thus, be taken into account. As indicated above, a setting of the guide railings 130 can be adjusted, specifically, in order to achieve a correct positioning of each box 114. Hereby, it may be avoided, on one hand, that the setting of the guide railings 130 may be too loose, thus, resulting in a low quality of the print of the serial code onto the box 114 since the box 114 may be movable during a printing procedure without the guide railings adjusted properly, whereas, on the other hand, it may also be avoided that the setting of the guide railings may be too tight, which may result in a damaging of the boxes 114. The two rails 130 may each have an L-shape designed for positioning the boxes 114 on the adjustable rails 130 from below and from the side. Herein, a horizontal element of the L-shaped rail may carry the box 114, while a vertical element of the L-shaped rail may act as a guide railing, thus, ensuring a precise lateral positioning of the boxes 114. Preferably, one of the L-shaped rails may be arranged in a fixed position with respect to the adjustable rails 130 while the second, mirrored L-shaped rail can be adjusted with regard to an individual width of each of the boxes 114, thus, allowing a flexible use of the adjustable rails 130.

The coding line 128 according to the present invention is used for serializing a plurality of products which are packed in the boxes 114, wherein a number of dispensed serial codes as provided by a database is, as particularly preferred, identical with the number of printed codes on the boxes 114. Therefore, in an event in which more than one box 114 may be pushed simultaneously through the coding line 128 by using a single push stroke of the servo pusher modules 136a, 136b, it may be particularly advantageous to ensure that always the same number of boxes 114 may be injected into the coding line 128 by using a feeder pusher. However, in an event in which a lower number of boxes 114 may actually be injected into the coding line 128 by using the feeder pusher, at least one of the dispensed serial numbers cannot be printed onto a box 114 since the corresponding box or boxes 114 may be missing, whereby an offset between the queue of codes on the boxes 114 compared to the queue of numbers as provided by the database may be generated.

In order to avoid this kind of event, a pushing force which may be exerted by the first and second servo pusher module136a, 136b for push the boxes 114 through the coding line 128 may be monitored, thus, allowing a detection of missing boxes 114 in front of the first and second servo pusher module servo pusher module 136a, 136b. Hereby, it may, thus, be ensured that all desired boxes 114 have actually been injected into the coding line 128. As indicated above, a linear servo drive may be used for the servo pusher modules130. This kind of arrangement may, in particular, allow a precise determination of the pushing force exerted by the first and second servo pusher servo pusher module modules 136a, 136b.

Herein, at least one of position, speed and acceleration of the servo pusher modules 136a, 136b may be recorded, specifically, by using an encoder (not depicted here). As a result, the position, the speed, and, if applicable, the acceleration of each box 114 within the row of the boxes 114 which are transported together on the adjustable rails 130, can, thus, be acquired. In addition, the pushing force as determined in this fashion may, further, be compared to a reference value which can be related to represent optimal guide railing settings. A deviation between the determined pushing force with respect to an optimal force which may be applicable for a correct setting of the guide railings may, thus, be used for correcting the settings of the guide railings, if required.

As indicated above, the coding line may comprise an integrated, automatic case packing station which will insert the boxes 114 into shipping cases. This case packing station is not depicted on the Figures 1 to 7. Once the boxes 114 are at the end of the coding line 128, they are pushed on the stacking frame which is adapted for receiving the coded boxes which already carry the desired code and which are lined up at the final section 170 of the adjustable rails by the servo pusher modules 136a and 136b. Herein, the shifter pushes the at least one coded box orthogonally to the forward direction 116 into the stacking frame, thereby adding an additional layer on top of an earlier placed row of the coded boxes in the stacking frame. After placing the additional row of the coded boxes into the stacking frame, the stacking frame may be lowered or lifted by a height of the box 114 in order to provide room for the additional layer to be added on top or underneath until the stacking frame may be full. Herein, a number of the coded boxes to be transferred into the stacking frame may be defined by a packaging scheme of a case, in particular a shipping case, which is adapted for receiving the coded boxes. Preferably, each push stroke of the shifter transfers the number of coded boxes adjusted for a full row of boxes 114 into the stacking frame.

Once the stacking frame may be completed, a large pusher plate which may be designed to cover a whole stack of the coded boxes comprising multiple levels of rows in accordance with the packaging scheme of the shipping case pushes the whole stack of the coded boxes sideward with respect to the forward direction from the stacking frame into the shipping case which may be in an erected position for this purpose, whereby an additional layer of the boxes comprising the whole stack of the coded boxes may be formed in the shipping case. This process may, preferably, be repeated until the shipping case is full. Thereafter, the shipping case may manually or automatically be replaced by a further empty shipping case.

In a preferred embodiment, at least one further unique identifier, which may, specifically, be provided in form of a barcode or an RFID (radio frequency identification device), which comprises a unique numeric or alpha-numeric string or a machine-readable representation thereof, may be applied onto the shipping case. For a purpose of reading the unique identifier on the shipping case and transmitting the read data to the database, at least one reading device may be used. In the database, the unique identifiers or code of all the coded boxes which are packed into the shipping case, which have previously been read by the camera 120, are correlated with the further unique identifier on the shipping case, thus, enabling an easy tracing of the serialized products comprised by the coded boxes within the supply chain.

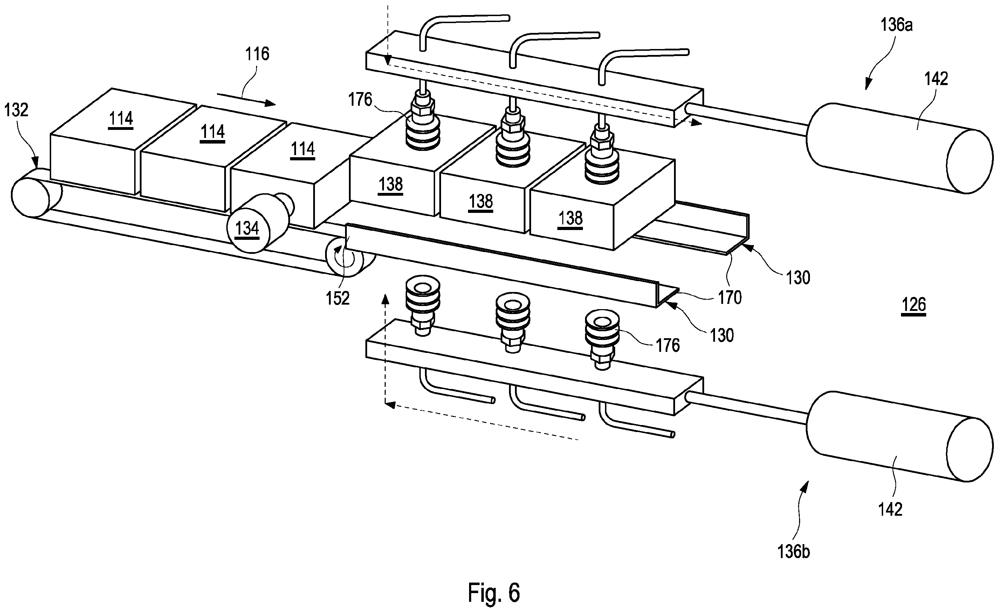

Figure 6 illustrates a perspective view of another exemplary embodiment of a coding line 128 according to the present invention. Hereinafter, only the differences from the previous embodiment will be described and like constructional members are indicated by like reference numerals. With the embodiment shown in Figure 6, the first and second servo pusher modules 136a, 136b each comprise a plurality of vacuum suction cups 176 and an actuator 142. The vacuum suction cups 176 are connected to the actuator 142. The vacuum suction cups 176 are arranged adjacent to one another or in a row in a direction parallel to the forward direction 116 and the adjustable rails 130, respectively. The plurality of vacuum suction cups 176 of the first and second servo pusher modules 136a, 136b are moveable parallel to the forward direction 116 by means of the respective actuator 142. Further, the vacuum suction cups 176 extend and retract, respectively, perpendicular to a plane defined by the adjustable rails 130. For this purpose, the two servo pusher modules may be arranged left and right of the adjustable rails or the first servo pusher module 136a is arranged below the adjustable rails 130 and the second servo pusher module 136b is arranged above the adjustable rails 130. The vacuum suction cups 176 are in fluid communication with a vacuum source not shown in detail such as by means of tubes or the like. Such a vacuum source is configured to apply a negative pressure to the vacuum suction cups 176. As the adjustable rails are spaced apart from one another, the vacuum suction cups 176 are not obstructed by the adjustable rails 130 and may engage the boxes 114.

The operation of the coding line 128 according to the embodiment shown in Figure 6 is basically identical to the operation of the coding according to the previous embodiment except for the first and second servo pusher modules extending and retracting depending on the arrangement of the servo pusher modules either in horizontal direction in lateral direction or respectively in an upwards and downwards manner. Particularly, by engaging the boxes 114 and applying a negative pressure to the vacuum suction cups 176, the vacuum suction cups 176 tightly adhere to the boxes 114 and can push the same in the forward direction 116 through the coding line 128.

The coding line 128 according to the first embodiment may be modified as follows. The first and second servo pusher modules 136a, 136b may be moved parallel to the adjustable rails 130 and the forward direction 116 and opposite to the forward direction 116 by means of the respective actuators 142. Further, the first and second servo pusher modules 136a, 136b and the pusher rods 140 thereof, respectively, may be configured to extend and retract in a direction parallel with respect to a plane defined by the adjustable rails 130, i.e. in a lateral direction. For this purpose, the respective actuators 142 may each be mounted to a frame like carrier which in turn is moveable on lateral rails. The frame like carriers in turn may each be moved by means of two orthogonal frame actuators. Further, the pusher rods 140 may carry on its front a pusher bar which will engage in the empty space of the stack 150.

### List of Reference Signs

- 110: prior-art coding machine
- 114: boxed product or box
- 116: direction of material flow or forward
- 118: printing device
- 120: camera
- 122: reject unit
- 124: rejected box
- 126: packing station
- 128: coding line
- 130: adjustable, L-profile rails
- 132: infeed conveyor
- 134: box stopping and blocking unit
- 136a: first servo pusher module
- 136b: second servo pusher module
- 140: retractable orthogonal pusher rod
- 143: pneumatic actuator for orthogonal pusher rod
- 142: servo actuator for driving the servo pusher module
- 144: bearing slider
- 145: bearing guideway
- 146: cross table
- 138: box sub-stack
- 148: end of infeed conveyor
- 150: open empty space
- 152: initial section
- 154: first phase of pushing cycle
- 156: rear position
- 158: front position
- 160: extension direction
- 162: second phase of pushing cycle
- 164: extension direction
- 166: retraction direction
- 168: third phase of pushing cycle
- 170: final section
- 172: retraction direction
- 174: fourth phase of pushing cycle
- 176: vacuum suction cups

## Claims

1. A method for serializing a plurality of products in a coding line (128), wherein each product is packed in a cuboid box (114), wherein the coding line (128) comprises at least one pair of adjustable rails (130), a feeding conveyor (132) for transporting the boxes (114) into the coding line (128), a box stopping and blocking unit (134) and at least a first servo pusher module (136a) and a second servo pusher module (136b) being adapted for alternately moving in parallel to the flow of the boxes through the coding line (128) and additionally being capable of extending in an orthogonal direction to engage with the sub-stack (138) of the boxes (114) on the adjustable rails (130) through the coding line (128), wherein the first and second servo pusher modules (136a, 136b) are synchronized such that when one of the first and second servo pusher modules (136a, 136b) extends and moves forward parallel to the adjustable rails (130) so as to push the sub stack (138) of boxes (114) forward through the coding line (128), the other one of the first and second pushers (136a, 136b) retracts and moves backwards parallel to the adjustable rails (130), wherein the box stopping and blocking unit (134) is positioned at least one box width in front of a crossover point (148) of the feeding conveyor (132) to the adjustable rails (130) and is configured to prevent a further movement of boxes (114) so as to provide an open space (150) in front of the sub-stack (138) of the boxes (114) at an initial section (152) of the adjustable rails (130), wherein the coding line (128) further comprises at least one printing system (118) designed for printing a serial code onto each of the boxes (114), wherein the serial code comprises at least one unique serial number, and at least one camera (120) designed for reading the serial code printed on each of the boxes (114), the method comprising the steps:
a) moving the first servo pusher module (136a) towards a rear position (156) with respect to a forward direction (116) of the boxes (114) and simultaneously moving the second servo pusher module (136b) towards a front position (162) with respect to the forward direction (116) of the boxes (114);
b) closing the box stopping and blocking unit (134to prevent a further movement of boxes (114) through the infeed conveyor 122 into the coding line so as to provide an open empty space (150) in front of a sub stack (138) of the boxes (114) at the initial section (152) of the adjustable rails (130);
c) extending the first servo pusher module (136a) at the rear position (156) in an orthogonal direction to engage the servo pusher module (136a) with the sub-stack (138) of boxes (114) by using the empty space (150) in front of the sub-stack (138) of boxes (114) and simultaneously retracting the second servo pusher module (136b) in the orthogonal direction at the front position;
d) opening the box stopping and blocking unit (134) thereby allowing the feeding conveyor (132) to fill the open space (150);
e) moving the first servo pusher module (136a) towards the front position (158) thereby pushing the sub stack (138) of boxes (114) forward through the coding line (128) with boxes coming from the infeed conveyor behind the moving first servo pusher module (136a) and simultaneously moving the second servo pusher module (136b) towards the rear position, whereby the sub stack (138) of boxes (114) is moved on the adjustable rails (130) to pass the printing system (118), whereby the serial code is printed onto the at least one box (114) passing the printing system (118), wherein the serial code comprises the at least one unique serial number, whereby the serial code printed on the at least one box (114) is read by the camera (120) which is assessing the print quality and finally passing a reject zone where boxes with substandard print quality are rejected until a final section of the adjustable rails is reached;
f) when the first servo pusher reaches (136a) its final position, it will retract in orthogonal direction to disengage the first servo pusher module (136a) with the sub-stack (138) of boxes (114);
g) repeating steps c) to f) with the second servo pusher module (136b) carrying out the actions of the first servo pusher module (136a) and vice versa, wherein steps a) to g) define a complete pushing cycle of the coding line (128).

2. The method according to claim 1, wherein the first and second servo pusher modules (136a, 136b) each comprise as servo actuator (142), particularly an electromagnetic servo drive, wherein the first and second servo pusher modules (136a, 136b) are moved parallel to the forward direction (116) and parallel to a plane defined by the adjustable rails (130) by means of its servo actuators (142).

3. The method according to claim 1 or 2, wherein the first and second servo pusher modules (136a, 136b) are formed as cross tables (146), wherein each cross table (146) supports a pusher rod (140) driven by an actuator (143), particularly, a pneumatic cylinder, and a pusher rod (140), wherein the pusher rod (140) extends into the open space (150) and retracts out of it, respectively, in a direction perpendicular with respect to the forward direction (116) of the boxes (114) by means of the actuator.

4. The method according to claim 1, wherein the first and second servo pusher modules (136a, 136b) each comprise a plurality of vacuum suction cups (176) and an actuator (142), wherein the vacuum suction cups (176) are connected to the actuator (142) and extend and retract, respectively, perpendicular to a plane defined by the adjustable rails (130).

5. The method according to anyone of the preceding method claims, wherein the servo pusher modules (136a and 136b) are arranged at right and left side of the adjustable rails (130) or alternatively are arranged on top and underneath of the adjustable rails (130).

6. The method according to anyone of the preceding method claims, wherein the infeed conveyor (132) is inserting the boxes (114) into the coding line (128) and the boxes (114) are transferred to the pair of adjustable rails (130) at the crossover point (148) which is positioned downstream behind the box stopping and blocking unit (134) in a distance which corresponds to at least the width of a box (114).

7. The method according to anyone of the preceding method claims, wherein the box stopping and blocking unit (134) engages a box (114) so as to prevent a further movement of the boxes (114).

8. The method according to anyone of the preceding claims, wherein the coding line (128) further comprises a reject unit (122), wherein the reject unit (122) is designed for identifying and excluding at least one rejected box (124) from further processing within the coding line (128), and a buffer, wherein the buffer is designed for replacing at least one rejected box (124) being rejected by the reject unit (122) or a missing box, wherein, during step b), for the at least one rejected box (124) and for the at least one missing box at least one replacement box is inserted onto the adjustable rails (132), wherein the number replacement boxes equals a sum of the number of the rejected boxes (124) and of the number of the missing boxes.

9. The method according to any one of the preceding claims, wherein the adjustable rails (130) comprise two individual rails each having an L-shape designated for positioning the boxes (114) on the adjustable rails (130) from below and from the side, wherein a horizontal element of the L-shaped rail carries the box (114) while a vertical element of the L-shaped rail acts as a railing, whereby a precise lateral positioning of the boxes (14) on the adjustable rails (130) is ensured.

10. The coding line (128) according to anyone of the preceding claims, wherein a setting of the adjustable rails (130) is adjusted perpendicular to the adjustable rails (130), whereby the coding line (128) is adapted for processing various box dimensions.

11. The method according to any one of the preceding claims, wherein the coding line (128) further comprises at least one tamper evident labeller designed for applying at least one tamper evident label onto the box (114) by gluing the tamper evident label over an edge of at least one flap of the box (114), whereby an integrity of the box (114) comprising the tamper evident label against unauthorized opening is ensured.

12. A coding line (128) for serializing a plurality of products, wherein each product is packed in a cuboid box (114), wherein the coding line (128) comprises at least one pair of adjustable rails (132), an infeed conveyor (112) for transporting the boxes (114) in the coding line (128), a box stopping and blocking unit (134), at least a first servo pusher module (136a) and a second servo pusher module (136b) being adapted for alternately moving a sub-stack (138) of the boxes (114) on the adjustable rails (130) through the coding line (128), wherein the first and second servo pusher modules (136a, 136b) are synchronized such that when one of the first and second servo pusher modules (136a, 136b) extends in an orthogonal direction to engage with the sub-stack of boxes (138) and moves forward so as to push the sub stack (138) of boxes (114) forward through the coding line (128), the other one of the first and second pushers (136a, 136b) retracts in the orthogonal direction and moves backwards, wherein the box stopping and blocking unit (134) is positioned in a distance of at least one box width in front of a crossover point (148) of the feeding conveyor (132) to the adjustable rails (130) and is configured to prevent a further movement of boxes (114) so as to provide an open space (150) in front of the sub-stack (138) of the boxes (114) at an initial section (152) of the adjustable rails (130), wherein the coding line (128) further comprises at least one printing system (118) designed for printing a serial code onto each of the boxes (114), wherein the serial code comprises at least one unique serial number, and at least one camera (120) designed for reading the serial code printed on each of the boxes (114), wherein the coding line (128) is preferably configured to carry out the method according to any preceding method claim.

13. The coding line (128) according to the preceding claim, wherein the first and second servo pusher modules (136a, 136b) each comprise a servo actuator (142), particularly an electromagnetic servo drive, wherein the first and second servo pusher modules (136a, 136b) are moveable parallel to the forward direction (116) and parallel to a plane defined by the adjustable rails (130) by means of its servo actuators (142).

14. The coding line (128) according to claim 12 or 13, wherein the first and second servo pusher modules (136a, 136b) are formed as cross tables (146), wherein each cross table (146) supports a pusher rod (140) driven by an actuator (143), particularly, a pneumatic cylinder, and a pusher rod (140), wherein the pusher rod (140) is configured to extend and retract, respectively, in a direction perpendicular with respect to the forward direction (116) of the boxes (114) by means of the actuator.

15. The coding line (128) according to claim 12, wherein the first and second servo pusher modules (136a, 136b) each comprise a plurality of vacuum suction cups (176) and an actuator (142), wherein the vacuum suction cups (176) are connected to the actuator (142) and are configure to extend and retract, respectively, perpendicular to a plane defined by the adjustable rails (130).
